# EUROPEAN PATENT SPECIFICATION

(11) **EP 2 695 446 B1**
(45) Date of publication and mention of the grant of the patent: **11.01.2017**
(21) Application number: 12719069.2
(22) Date of filing: 02.04.2012
(51) Int. Cl.: H04W 48/20, H04W 24/10, H04W 36/08, H04W 36/14

(54) **FAST RESELECTION BETWEEN DIFFERENT RADIO ACCESS TECHNOLOGY NETWORKS**
SCHNELLE WIEDERWAHL ZWISCHEN NETZEN MIT VERSCHIEDENEN FUNKZUGANGSTECHNOLOGIEN
RESÉLECTION RAPIDE ENTRE DES RÉSEAUX UTILISANT DES TECHNOLOGIES D'ACCÈS RADIO DIFFÉRENTES

(30) Priority: 01.04.2011 GB 201105590; 01.04.2011 US 201113078124
(43) Date of publication of application: 12.02.2014
(60) Divisional application: 14194423.1
(73) Proprietor: Xiaomi H.K. Limited, Wanchai (HK)
(72) Inventor: MARTIN, Brian, Farnham, Surrey GU9 0LY (GB); GEARY, Stuart, Fleet, Hampshire GU51 1JD (GB); CHARLES, Alexander Graham, Fleet, Hampshire GU51 2US (GB); FRANKLIN, Steven, Guildford, Surrey GU2 9PS (GB); TOOLEY, James, Wimbledon Park, Greater London SW19 8AD (GB); CALLENDER, Christopher, Kinross, Kinross-Shire KY13 0LW (GB)
(74) Representative: EIP
(86) International application number: PCT/IB2012/051596
(87) International publication number: WO 2012/131655

(56) References cited:
- EP-A1- 2 262 301
- EP-A2- 2 077 690
- NTT DOCOMO ET AL: "IDLE mode mobility control principles", 3GPP DRAFT; R2-074001 IDLE MODE MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071002, 2 October 2007 (2007-10-02), XP050136641, [retrieved on 2007-10-02]
- NOKIA ET AL: "E-UTRA Cell Selection and Cell Reselection Aspects", 3GPP DRAFT; R2-073622 E-UTRA CELL RESELECTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070817, 17 August 2007 (2007-08-17), XP050136308, [retrieved on 2007-08-17]
- "3rd Generation Partnership Project; Technical Specification Group Radio Access Network; Requirements for support of radio resource management (FDD) (Release 10)", 3GPP STANDARD; 3GPP TS 25.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 6 January 2011 (2011-01-06), pages 1-253, XP050462545, [retrieved on 2011-01-06] cited in the application

## Description

### Field of the Invention

The exemplary and non-limiting embodiments of this invention relate generally to wireless communication systems, methods, devices and computer programs and, more specifically, relate to state transitions of a user equipment to take measurement reports for the purpose of reselecting between different priority cells.

### Background

The following abbreviations that may be found in the specification and/or the drawing figures are defined as follows:
- 3GPP: third generation partnership project
- DCH: dedicated channel
- DL: downlink
- DRX: discontinuous reception
- E-UTRAN: evolved UTRAN (also termed LTE)
- FACH: forward access channel
- GERAN: GSM-enhanced data rates for global evolution (EDGE)
- GSM: global system for mobile communications
- HSPA: high speed packet access
- LTE: long term evolution
- PCH: paging channel
- RAT: radio access technology
- RRC: radio resource control
- TDD: time division duplex
- UE: user equipment
- UMTS: universal mobile telecommunications system
- UL: uplink
- URA: user registration area
- UTRA: UMTS terrestrial radio access
- UTRAN: UTRA network
- WCDMA: wideband code division multiple access

The exemplary embodiments detailed herein are in the context of the UTRAN (e.g., WCDMA, HSPA, and GERAN) wireless systems by which a UE attached to a UTRAN cell via a FACH or DCH (the CELL-FACH and CELL-DCH states respectively) seeks to transition and attach to another higher priority cell (e.g., an inter-RAT E-UTRAN/LTE cell or an inter-frequency UTRAN cell operating on a higher priority frequency layer). These systems are exemplary only and these teachings are not limited only to those wireless systems but are more generally applicable.

There is intentionally no specification in LTE Release 8 for detailing how a UE in the CELL-FACH state may reselect to the LTE system since at the time it was assumed that such a UE could transition to the idle/cell-PCH/URA-PCH state to make the re-selection. Since then a problem has been identified (i.e., in 3GPP RAN2#73 and RAN4#58 meetings) in which a UE may not be in an idle/Cell-PCH/URA-PCH state long enough to measure, analyze, and reselect from UTRAN to a higher priority E-UTRAN cell (e.g. LTE hotspots). Specifically, reselection from the UTRAN CELL-FACH state when under certain network configured state transition timers (e.g., the timer used for transitioning from CELL-FACH to URA-PCH) and traffic patterns, combined with the specified UE measuring rules, may make it impossible in certain circumstances for a UE to ever complete a reselection to an E-UTRAN cell. These conditions arise when the traffic pattern is "bursty" (e.g., when the UE is a packet switched oriented device used for always online type services, such as a combined UMTS/LTE USB (universal serial bus) modem which can be connected to a laptop).

One possible solution discussed was to enable reselection to an LTE cell while the UE was in the CELL-FACH state. This may not be universally suitable; it is a network equipment choice whether to use measurement occasions in the CELL-FACH state even if the same network operator deploys LTE cells in the same geographic area as its UTRAN cells.

It is therefore desirable to also have solutions for the UE to use when making frequent transitions between UTRAN CELL-FACH and CELL-PCH or URA-PCH states which are not dependent on the UTRAN's ability to configure and accept a UE's measurements in the CELL-FACH state.

European patent application EP-A-2262301 describes a handover control method which comprises: a step in which a mobile station measures radio qualities in a plurality of different frequency cells at predetermined measurement intervals; and a step in which the mobile station, when determining that the radio quality in a specific frequency cell satisfies a report condition, starts up a timer for measuring the time during which the radio quality in the specific frequency cell continues to satisfy the report condition and, when the timer has expired, transmits to a radio base station a measurement report including the radio quality in the specific frequency cell. The mobile station, after determining that the radio quality in a second frequency cell satisfies the report condition and starting up a second timer, stops the second timer and starts up a first timer when determining that the radio quality in a first frequency cell having a higher priority than that of the second frequency cell satisfies the report condition.

European patent application EP-A-2077690 describes a method, device and computer program product for performing cell reselection based on priorities, where the method includes measuring a signal of a candidate cell, and selecting the candidate cell when the signal characteristic of the candidate cell satisfies a certain criterion for a certain time duration, wherein the certain time duration is modified according to a priority of the candidate cell.

In the current specification, the UE is required to perform the following steps:
a. Stop monitoring LTE neighbour cells when moving from Idle or PCH states to CELL-FACH state.
b. Start monitoring LTE neighbour cells when leaving CELL-FACH state to Idle or PCH states. The combination of steps a) and b) implies the UE needs to re-start its measurement evaluation and discard measurements taken before moving to the CELL-FACH state when it starts a new measurement after leaving the CELL-FACH state.
c. Measure high priority frequency layers at least every 60s per configured higher priority frequency layer. This implies some UEs may wait 60s per configured higher priority frequency layer before making a measurement after entering idle or PCH states.
d. Measure high priority (LTE) frequency layers at minimum each Kcarrier * T_{measure,EUTRA}. For a typical 1.28 DRX cycle this is 6.4s if one E-UTRA higher priority carrier is configured.
e. Measure and average at least 2 samples before making the reselection decision, and these measurements must be separated by at least (K_{carrier} * T_{measure,EUTRA})/2. Even if one assumes the UE takes its first measurement immediately after moving out of the CELL-FACH state, at least 2.5 * DRX cycles will pass before a decision can be made and reselection can be performed. Typically this will be at least 3.84s total for a 1.28s DRX cycle. Taking into account that it is undesirable for battery life for the UE to wake up during the DRX cycle, the earliest time to transition to an LTE neighbour cell is 3 DRX cycles after the UE moves out of the Cell-FACH state.
f. Apply T_{reselection} before moving to the new cell. T_{reselection} is a delay imposed so the UE can check that the serving cell does not recover from giving bad coverage before the UE completes the reselection, and also allows the UE to check that the neighbour/new cell remains best ranked. This check deliberately adds additional delay to the reselection.
g. If, after detecting a cell in a higher priority search, it is determined that reselection has not occurred then the UE is not required to continuously measure the detected cell to evaluate the ongoing possibility of reselection and may wait for 60s per configured higher priority frequency layer before evaluating the frequency again.

Co-owned US Patent Application 13/023,675 entitled PRIORITY MEASUREMENT RULES FOR CHANNEL MEASUREMENT OCCASIONS (filed February 9, 2011) details the use of measurement occasions in the CELL-FACH state to enable reselection. The solution detailed by the exemplary embodiments herein is even more universally adoptable since it is anticipated to be operable for all network configurations/timer settings.

### Summary of the Invention

According to the present invention, an apparatus for controlling a user equipment as set forth in claim 1, a method of controlling a user equipment as set forth in claim 6 and a computer readable memory as set forth in claim 11 are provided. Embodiments of the invention are claimed in the dependent claims. In a first exemplary embodiment of the invention there is an apparatus for use in controlling a user equipment, the apparatus comprising a processing system that may for example comprise at least one processor and a memory storing a set of computer instructions. In this embodiment the processing system is arranged to: determine that a neighbour cell is a higher priority cell than a serving cell; measure signal strength received from the neighbour cell, and analyze the measured signal strength for reselecting a user equipment from the serving cell to the neighbour cell, characterised in that the measurement comprises measuring signal strength received from the neighbour cell in *n* iterations each spaced from one another by a time interval specific for the case in which the neighbour cell is the higher priority cell, in which *n* is an integer greater than one, and the analysis comprises analysing the *n* measured signal strengths for reselecting the user equipment from the serving cell to the neighbour cell, wherein the neighbour cell is a higher priority frequency layer cell or a higher priority radio access technology cell, and the serving cell is a UTRAN cell, wherein signal strength is measured across the *n* iterations while the user equipment is in one of a Cell-PCH state, URA-PCH state or idle mode with the UTRAN serving cell, and wherein a first one of the *n* iterations measures signal strength on a first available measurement opportunity after transitioning to the said one of the Cell-PCH state, URA-PCH state or idle mode.

In a second exemplary embodiment of the invention there is a method of controlling a user equipment, the method comprising: determining that a neighbour cell is a higher priority cell than a serving cell; measuring signal strength received from the neighbour cell, and analyzing the measured signal strength for reselecting a user equipment from the serving cell to the neighbour cell, characterised in that the measurement comprises measuring signal strength received from the neighbour cell in *n* iterations each spaced from one another by a time interval specific for the case in which the neighbour cell is the higher priority cell, in which *n* is an integer greater than one, and the analysis comprises analysing the *n* measured signal strengths for reselecting the user equipment from the serving cell to the neighbour cell, wherein the neighbour cell is a higher priority frequency layer cell or a higher priority radio access technology cell, and the serving cell is a UTRAN cell, wherein signal strength is measured across the *n* iterations while the user equipment is in one of a Cell-PCH state, URA-PCH state or idle mode with the UTRAN serving cell, and wherein a first one of the *n* iterations measures signal strength on a first available measurement opportunity after transitioning to the said one of the Cell-PCH state, URA-PCH state or idle mode.

In a third exemplary embodiment of the invention there is a computer readable memory storing a set of instructions which, when executed by a user equipment, cause the user equipment to: determine that a neighbour cell is a higher priority cell than a serving cell; measure signal strength received from the neighbour cell, and analyze the measured signal strength for reselecting a user equipment from the serving cell to the neighbour cell, characterised in that the measurement comprises measuring signal strength received from the neighbour cell in *n* iterations each spaced from one another by a time interval specific for the case in which the neighbour cell is the higher priority cell, in which *n* is an integer greater than one, and the analysis comprises analysing the *n* measured signal strengths for reselecting the user equipment from the serving cell to the neighbour cell, wherein the neighbour cell is a higher priority frequency layer cell or a higher priority radio access technology cell, and the serving cell is a UTRAN cell, wherein signal strength is measured across the *n* iterations while the user equipment is in one of a Cell-PCH state, URA-PCH state or idle mode with the UTRAN serving cell, and wherein a first one of the *n* iterations measures signal strength on a first available measurement opportunity after transitioning to the said one of the Cell-PCH state, URA-PCH state or idle mode.

These and other embodiments and aspects are detailed below with particularity.

### Brief Description of the Drawings

Figure 1 is a schematic diagram of an exemplary environment in which embodiments of the invention may be practiced, a mobile device/UE under a UTRAN serving cell taking measurements for transitioning to an E-UTRAN neighbour cell.
Figure 2 is a logic flow diagram that illustrates the operation of a method, and a result of execution of computer program instructions embodied on a computer readable memory, in accordance with the exemplary embodiments of this invention.
Figure 3 is a simplified block diagram of the UE in communication with a UTRAN network and taking measurements of a neighbour E-UTRAN cell, and illustrating exemplary electronic devices suitable for use in practicing the exemplary embodiments of this invention.

### Detailed Description of the Description

There are several RRC states in UTRA. The CELL-DCH state is characterized by a dedicated physical channel being allocated to the UE in uplink and downlink, the UE has a current active set given by the UTRAN cell, and the UE is able to use various transport channels such as dedicated transport channels and, in the UMTS TDD mode the UE can also use UL and DL shared transport channels. The CELL-FACH state is characterized by there being no dedicated physical channel allocated to the UE but instead the UE continuously monitors the FACH in the DL. In the CELL-FACH state the UE is assigned a common (default) or shared transport channel in the UL (RACH) which it can use for accessing a transport channel, and a UE in the UMTS TDD mode may additionally access one or more UL and DL shared channels. These may be considered more active states since the UE must monitor active channels more frequently than in the CELL-PCH or URA-PCH states detailed below.

The CELL-PCH state is characterized in that there is no dedicated physical channel allocated to the UE but instead the UE monitors for a page on the PCH, using a DRX to allow it to go into a power save mode when not listening to the PCH. It follows that no UL activity is possible in the CELL-PCH state. The URA-PCH state is similar, except instead of the cell itself tracking the UE's location from its last update in the CELL-FACH state the network tracks the UE location in the URA-PCH state only to the granularity of a UTRAN registration area (the UE makes URA updates while in the CELL-FACH state). These are of course less active from the UE's perspective than the CELL-DCH and the CELL-FACH states.

According to embodiments of these teachings to be detailed below, the UE operating in a UTRAN cell will change its RRC state from CELL-FACH or CELL-DCH (as the case may be) to CELL-PCH, URA-PCH or idle mode and collect measurements of a neighbour cell for reselection purposes. How those measurements are collected is detailed below with particularity.

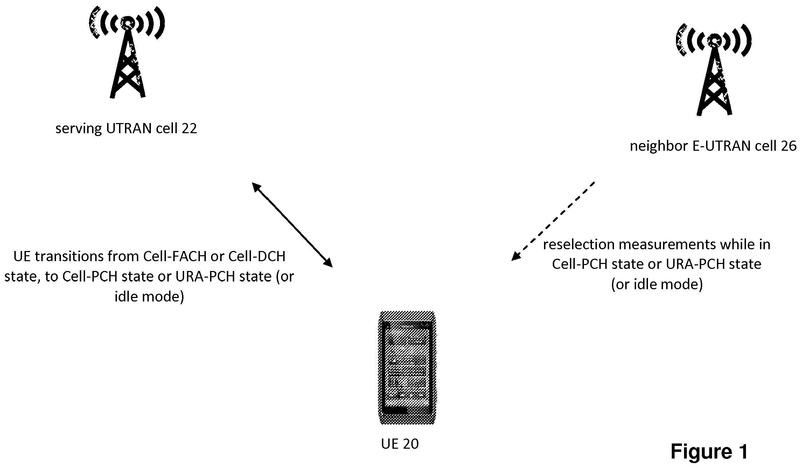

Figure 1 is a schematic diagram of a mobile device/UE 20 under a UTRAN serving cell 22. The UE 20 begins in a CELL-FACH or CELL-DCH state and transitions to either the CELL-PCH or URA-PCH state or idle mode/state. After transitioning to one of those states/modes the UE 20 measures the signal received from an E-UTRAN neighbour cell 26, and the UE 20 will then base its decision whether or not to reselect to the E-UTRAN cell 26 at least in part on the UE's analysis of those measurements. But the UE 20 is still under the serving UTRAN cell 22 and so must take measurements only at times when it is assured the serving UTRAN cell 22 will not send a transmission to it. As compared to the CELL-FACH and CELL-DCH states, the UE 20 has more opportunities to measure the neighbour cell 26 when it is only monitoring the PCH of the serving cell 22, hence the UE will first need to transition its RRC state from CELL-FACH or CELL-DCH to either CELL-PCH, URA-PCH or idle.

In the CELL-PCH state, URA-PCH state or idle mode the times at which the UE 20 need not 'listen' to the serving cell are governed in part by the DRX period which the UTRAN cell 22 assigns to the UE 20. In order to properly evaluate whether a neighbour cell 26 is appropriate for reselection, the UE 20 must obtain enough measurements to accurately reflect the radio conditions it can expect from the neighbour cell so that if indeed the UE 20 does reselect to it the UE will be able to maintain the channel(s). These measurements must be obtained quickly enough so that they remain valid in the face of possibly fading channel conditions. These measurements which the UE 20 takes of the neighbour cell 26 are by example received signal strength, or more particularly received signal power.

Exemplary embodiments of these teachings enable the UE 20 to make a fast reselection decision by allowing a shorter time interval between the measurements it obtains from the neighbour cell. For example, if the UE 20 having a UTRAN serving cell 22 is performing measurements on a neighbour cell which is an E-UTRAN cell 26 (or some other cell that is considered higher priority than the serving cell) then the UE 20 will use the shorter time interval between the measurements it takes on that E-UTRAN neighbour cell 26. But if instead that same UE 20 is taking measurements on a UTRAN neighbour cell (or some other cell that is not considered higher priority than the serving cell) then the UE 20 will use a longer time interval between those measurements.

The UE 20 can readily determine which neighbour cell is UTRAN and which is E-UTRAN along with corresponding priorities from the neighbour cell list broadcast in system information by the serving cell or informed to the UE by dedicated signalling, the neighbour cells' own broadcast system information or even from the frequency bands on which the neighbour cells transmit. The neighbour cell list may inform on what frequencies the neighbour cells operate; these are the frequency layers which the UE 20 measures for handover/reselection purposes. In an embodiment, the UE 20 determines from that neighbour cell list which neighbour cells are operating on which RAT and which carriers are higher or lower priority than the serving frequency.

Generally, more recently specified RATs are configured as higher priority over older RATs since it is typical that the newer RAT will enable a higher data rate and/or more services than the older RAT. It is likely that E-UTRAN offers higher data rates and or more services than UTRAN. So in an embodiment the higher priority cell may be defined by the radio access technology it employs relative to that used by the serving cell.

According to a specific embodiment there are three distinct actions which the UE 20 takes for collecting and analyzing measurement reports for the purpose of reselecting to a higher priority cell as follows:
The first action the UE takes is when a UE transitions its RRC state from the CELL-FACH or CELL-DCH state to the CELL-PCH state, URA-PCH state or Idle mode, the UE 20 will immediately upon making that RRC state change attempt to take a measurement of higher priority (e.g., LTE) frequency layers on the UE's first available measurement opportunity. The immediate measurement is needed because the time the UE is in an idle state may be limited. To mandate this behavior across UEs from different manufacturers will likely require that it be stipulated in a published specification. Taking the first measurement immediately after changing RRC state aids in making the whole reselection decision faster.

The second action the UE takes is when, and as mentioned above, there are different intervals between when the UE 20 takes its neighbour cell measurements, depending on whether or not the neighbour cell 26 being measured is higher priority than the serving cell 22. In one non-limiting embodiment, once the UE determines that the neighbour cell 26 is an E-UTRAN or other higher priority cell, the UE 20 in the CELL-PCH state, URA-PCH state or Idle mode shall take measurements separated by a shorter time, such as for example one DRX cycle. The time interval is shorter as compared to if the neighbour cell were a UTRAN cell or a cell having the same or lower priority than the serving cell. This allows the UE 20 to average its measurement results and make the evaluation fast for reselection to a higher priority inter-RAT neighbour cell. Averaging multiple measurements assures robustness for the short term channel fading.

In current E-UTRAN specifications there is a value T_{measure_EUTRA} which gives a minimum measurement rate, but this minimum is the same as for the UTRAN cells and so it seems that these requirements from 3GPP TS 25.133 are the same for LTE as for GSM. The inventors recall that at the time these portions of the specification were drafted the goal was to conserve UE battery power by having a low minimum measurement rate. The inventors consider this appropriate for lower priority cells which need to be measured continuously in certain circumstances, but not necessarily so for higher priority cells. Specifically, the current rule set forth in 3GPP TS 25.133 v10.0.0 (2010-12) at section 4.2.2.5a is:
The UE shall measure RSRP at least every K_{carrier} * T_{measure,EUTRA} as defined in table 4.2 for identified E-UTRA cells.
The UE shall filter RSRP measurements of each measured E-UTRA cell using at least 2 measurements. Within the set of measurements used for the filtering, at least two measurements shall be spaced by at least (K_{carrier} * T_{measure,EUTRA})/2.

For robustness of the reselection decision the UE should take multiple measurements before determining to reselect to the neighbour cell. Therefore the number of measurement iterations for a given neighbour cell shall be n iterations, in which n is an integer greater than one. The total time over which these n iterations for making a reselection evaluation are repeated is defined by the time period T_{higher_priority_search}, but the interval between each iteration of measuring depends on whether or not the neighbour cell being measured is higher priority than the serving cell. This maximizes the chance of performing the required two samples for higher priority frequencies and RATs before the RRC state changes, while not affecting the power consumption of measurements of lower priority frequencies and RATs.

In an embodiment this may be implemented by publication in a specification stipulating that the different (fast) measurement evaluation rules apply conditonally for high priority layers. By example, a new table in RAN4 specifications may be added to give the time intervals applicable only for reselection decisions concerning high priority E-UTRA cells.

The third action the UE takes according to this exemplary embodiment is to ignore the parameter T_{reselection} when deciding whether to reselect to a higher priority cell or frequency layer, so long as the UE has been able to average at least n=2 measurement samples for its analysis of the higher priority neighbour cell. T_{reselection} is a network configurable time period in E-UTRAN specifications during which the UE is to check that the reselection condition continues to be met, to assure it's not been triggered by a temporary fade. By example, the reselection condition may be the signal strength of the serving cell falling below a threshold. Averaging as few as two measurement samples should give enough confidence of the target/neighbour high priority cell when considering channel fading conditions. The serving cell quality is irrelevant in service based reselections (i.e., where the UE 20 seeks to attach to an E-UTRAN hot spot to access enhanced services but still remains attached to the same UTRAN serving cell for basic cellular coverage).

This third action may also in an embodiment be mandated by a published standard to change the current UE directives. In one embodiment the UE can ignore checking signal strength/quality/power of the serving cell after its measurements and before reselecting to high priority frequency layers/cells. In an alternative embodiment the UE may be allowed to (or required to) ignore checking whether its original reselection condition or trigger remains satisfied after a specified time period T_{reselection} when deciding to reselect to higher priority layers/cells.

Consolidating these three actions would then result in one specific but non-limiting embodiment in which the UE transitions from CELL-FACH to IDLE/PCH state, then performing an immediate measurement of high priority EUTRAN frequency layers. After one paging period has elapsed the UE will perform a second measurement of high priority EUTRAN frequency layers. The UE then analyzes those measurements so that if both measurements confirm a suitable E-UTRAN high priority candidate then the UE ignores the T_{reselection} timer and performs immediate reselection to the identified candidate.

Certain exemplary embodiments as detailed above provide the technical effect of ensuring that the UE is very likely to evaluate and reselect to high priority LTE frequency layers even with the most challenging of data traffic patterns and network configurations. An additional technical effect is that the UE could reselect within two DRX cycles after transitioning to a semi-idle state (CELL-PCH or URA-PCH) or to the idle mode, so unless the UE is paged on the very first paging occasion after the state transition it will always reselect (assuming the measurement reports verify the neighbour cell is strong enough). As a result of the above, the user experience is improved as hotspot locations can be found even during "always online" data sessions. Another technical effect is that power consumption is not affected if the UE remains in an idle/semi-idle mode, since the UE may then wait the same length of time (T_{higher_priority_search}) until it performs the next higher priority search, and the total number of measurement samples taken for each search is unchanged.

Additionally, implementation is seen to be quite straightforward since no new network configuration is needed and so no network upgrade is necessary. Further, there is little, if any, issue of interoperability since implementation is within the UE itself.

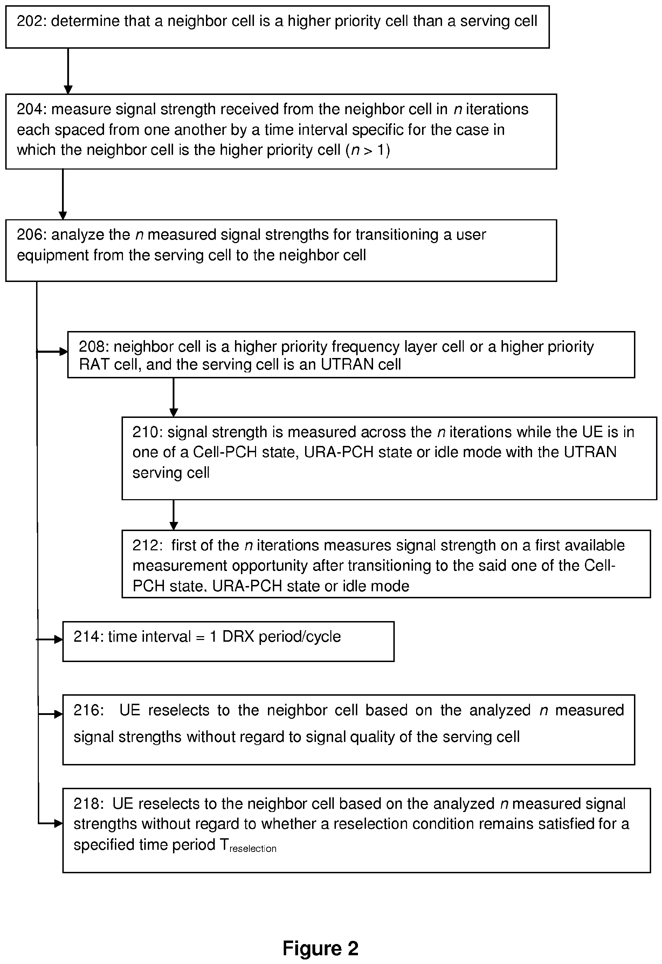

Figure 2 is a logic flow diagram which describes an exemplary embodiment of the invention from the perspective of the UE. Figure 2 may be considered to illustrate the operation of a method, and a result of execution of a computer program stored in a computer readable memory, and a specific manner in which components of an electronic device/UE are configured to cause that electronic device to operate. The various blocks shown in Figure 2 may also be considered as a plurality of coupled logic circuit elements constructed to carry out the associated function(s), or specific result of strings of computer program code or instructions stored in a memory.

Such blocks and the functions they represent are non-limiting examples, and may be practiced in various components such as integrated circuit chips and modules, and that the exemplary embodiments of this invention may be realized in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

At block 202 the UE or component(s) thereof determines that a neighbour cell is a higher priority cell than a serving cell. At block 204, the UE or component thereof measures signal strength received from the neighbour cell in n iterations, each spaced from one another by a time interval specific for the case in which the neighbour cell is the higher priority cell. As noted above n is an integer greater than one. Then at block 206 the UE or component(s) thereof analyze the n measured signal strengths for the purpose of reselecting the UE from the serving cell to the neighbour cell. By example this analysis includes averaging the n iterations of the measured signal strengths.

The remainder of Figure 2 illustrates more specific implementations for blocks 202, 204 and 206. Block 208 stipulates that the neighbour cell is a higher priority frequency layer cell (e.g., a UTRAN cell operating on higher priority frequency layers than the serving cell) or a higher priority RAT cell (e.g., an E-UTRAN cell), and the serving cell is an UTRAN cell. That is, the neighbour cell may be an E-UTRAN cell or even a GSM cell which the operator has configured for higher priority frequency layers. Block 210 further details block 208 in that the signal strength of block 204 is measured across the n iterations while the user equipment is in one of a Cell-PCH state, URA-PCH state or idle mode with the UTRAN serving cell. Block 212 further narrows block 212 in that a first one of the n iterations measures signal strength on a first available measurement opportunity after the UE transitions to the Cell-PCH state, URA-PCH state or idle mode.

Block 214 gives the exemplary time interval between the higher priority measurement iterations, one DRX period which the UE utilizes with the serving cell. Block 216 details the embodiment in which the UE reselects from the serving cell to the neighbour cell based on the analyzed n measured signal strengths, without regard to signal quality of the serving cell which as noted above is one example of a reselection condition. Block 218 gives an alternative embodiment to block 216, in which the UE reselects from the serving cell to the neighbour cell based on the analyzed n measured signal strengths without regard to whether a reselection condition remains satisfied for a specified time period T_{reselection}.

In a specific embodiment, Figure 2 may be considered to represent actions of a modem which may be apart from or disposed within the above UE.

Embodiments of the invention may be implemented as an apparatus which has determining means and measuring means and analyzing means. The determining means is for determining that a neighbour cell is a higher priority cell than a serving cell as in block 202 of Figure 2, and may by example be a processor in conjunction with computer instructions stored in a computer readable memory and also in conjunction with a radio receiver. The measuring means is for measuring signal strength received from the neighbour cell in n iterations spaced by the priority-specific interval, as shown at block 204 of Figure 2. Specific embodiments of such measuring means may be the above noted radio receiver. And there may also be analyzing means for analyzing the n measured signal strengths for reselecting a UE from the serving cell to the neighbour cell as detailed at block 206 of Figure 2, such analyzing means by example also being the processor (or one or more processors).

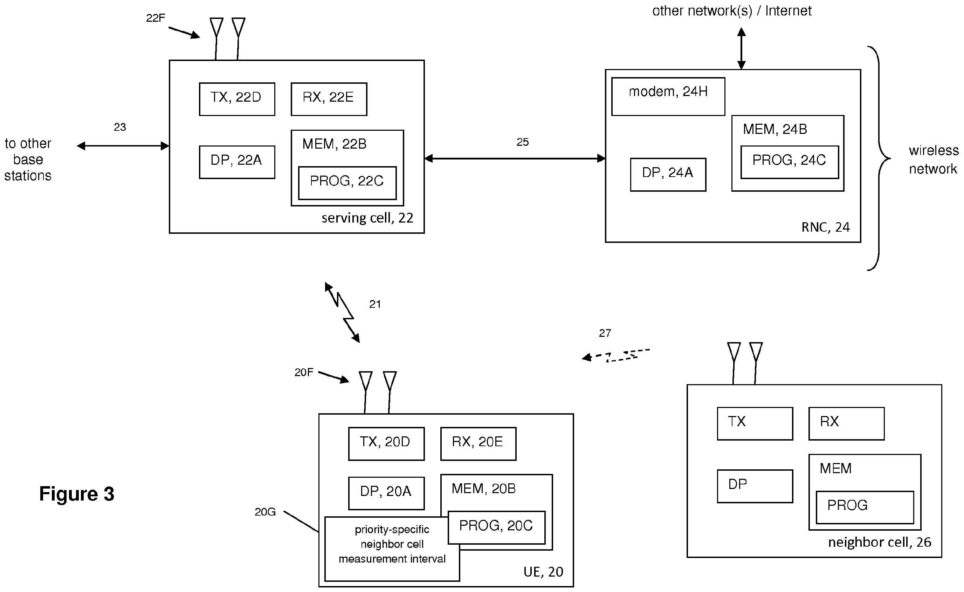

Reference is now made to Figure 3 for illustrating a simplified block diagram of various electronic devices and apparatus that are suitable for use in practicing the exemplary embodiments of this invention. In Figure 3 a wireless network (base station 22 and RNC 24) is adapted for communication over a wireless link 21 with an apparatus, such as a mobile terminal or UE 20, via a network access node such as a base station/NodeB 22 or relay station. The network may include a radio network controller RNC 24, which provides connectivity with further networks (e.g., a publicly switched telephone network PSTN and/or a data communications network/Internet).

The UE 20 includes processing means such as at least one data processor (DP) 20A, storing means such as at least one computer-readable memory (MEM) 20B storing at least one computer program (PROG) 20C, communicating means such as a transmitter TX 20D and a receiver RX 20E for bidirectional wireless communications with the base station 22 via one or more antennas 20F. Also stored in the MEM 20B at reference number 20G is the priority-specific neighbour cell measuring interval, which may be implemented by non-limiting example as a lookup table or as an algorithm. At least the processing means in combination with the storing means in which is stored the PROG of computer instructions may be considered a processing system.

The base station 22 also includes processing means such as at least one data processor (DP) 22A, storing means such as at least one computer-readable memory (MEM) 22B storing at least one computer program (PROG) 22C, and communicating means such as a transmitter TX 22D and a receiver RX 22E for bidirectional wireless communications with the UE 20 via one or more antennas 22F. There is a data and/or control path 25 coupling the base station 22 with the RNC 24, and another data and/or control path 23 coupling the base station 22 to other base stations/node Bs/access nodes.

Similarly, the RNC 24 includes processing means such as at least one data processor (DP) 24A, storing means such as at least one computer-readable memory (MEM) 24B storing at least one computer program (PROG) 24C, and communicating means such as a modem 24H for bidirectional wireless communications with the base station 22 via the data/control path 25. While not particularly illustrated for the UE 20 or base station 22, those devices are also assumed to include as part of their wireless communicating means a modem which may be inbuilt on an RF front end chip within those devices 20, 22 and which also carries the TX 20D/22D and the RX 20E/22E.

Also shown is a neighbour cell 26 which similarly has a DP, MEM storing a PROG and transmitter, receiver and antennas. The neighbour cell 26 transmits on path 27 which the UE 20 measures according to the interval stored at 20G.

At least one of the PROGs 20C/20G in the UE 20 is assumed to include a set of computer readable instructions that, when executed by the associated DP 20A, enable the device to operate in accordance with the exemplary embodiments of this invention, as detailed above. In this regard the exemplary embodiments of this invention may be implemented at least in part by computer software instructions stored on the MEM 20B which are executable by the DP 20A of the UE 20, or by hardware, or by a combination of tangibly stored software and hardware (and tangibly stored firmware). Electronic devices implementing these aspects of the invention need not be the entire UE 20, but exemplary embodiments may be implemented by one or more components of same such as the above described tangibly stored software, hardware, firmware and DP, modem, system on a chip SOC or an application specific integrated circuit ASIC.

In general, the various embodiments of the UE 20 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable MEMs 20B and 22B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DPs 20A and 22A include but are not limited to general purpose computers, special purpose computers, microprocessors, digital signal processors (DSPs) and multi-core processors.

Various modifications and adaptations to the foregoing exemplary embodiments of this invention may become apparent to those skilled in the relevant arts in view of the foregoing description. While the exemplary embodiments have been described above in the context of the UTRAN and E-UTRAN systems, it should be appreciated that the exemplary embodiments of this invention are not limited for use with only this one particular type of wireless communication system, and that they may be used to advantage in other wireless communication systems.

Further, some of the various features of the above non-limiting embodiments may be used to advantage without the corresponding use of other described features. The foregoing description should therefore be considered as merely illustrative of the principles, teachings and exemplary embodiments of this invention, and not in limitation thereof.

## Claims

1. An apparatus for controlling a user equipment, the apparatus comprising a processing system arranged to:
determine (202) that a neighbour cell is a higher priority cell than a serving cell;
measure signal strength received from the neighbour cell; and
analyze the measured signal strengths for reselecting the user equipment from the serving cell to the neighbour cell, **characterised in that**:
the measurement comprises measuring (204) signal strength received from the neighbour cell in n iterations each spaced from one another by a time interval specific for the case in which the neighbour cell is the higher priority cell, in which n is an integer greater than one; and
the analysis comprises analysing (206) the n measured signal strengths for reselecting the user equipment from the serving cell to the neighbour cell,
wherein (208) the neighbour cell is a higher priority frequency layer cell or a higher priority radio access technology cell, and the serving cell is a UTRAN cell,
wherein (210) signal strength is measured across the n iterations while the user equipment is in one of a Cell-PCH state, URA-PCH state or idle mode with the UTRAN serving cell, and
wherein (212) a first one of the n iterations measures signal strength on a first available measurement opportunity after transitioning to the said one of the Cell-PCH state, URA-PCH state or idle mode.

2. The apparatus according to claim 1, wherein the time interval comprises one discontinuous reception period which the user equipment utilizes with the serving cell.

3. The apparatus according to claim 1 or 2, wherein the processing system is further arranged to:
reselect from the serving cell to the neighbour cell based on the analyzed *n* measured signal strengths without regard to signal quality of the serving cell.

4. The apparatus according to claim 1 or 2, wherein the processing system is further arranged to:
reselect from the serving cell to the neighbour cell based on the analyzed n measured signal strengths without regard to whether a reselection condition remains satisfied for a specified time period T_{reselection}.

5. The apparatus according to any preceding claim, wherein the processing system comprises a modem disposed within the user equipment.

6. A method of controlling a user equipment, the method comprising:
determining (202) that a neighbour cell is a higher priority cell than a serving cell;
measuring signal strength received from the neighbour cell; and
analyzing the measured signal strength for reselecting the user equipment from the serving cell to the neighbour cell, **characterised in that**:
the measurement comprises measuring (204) signal strength received from the neighbour cell in n iterations each spaced from one another by a time interval specific for the case in which the neighbour cell is the higher priority cell, in which n is an integer greater than one; and
the analysis comprises analysing (206) the n measured signal strengths for reselecting the user equipment from the serving cell to the neighbour cell,
wherein (208) the neighbour cell is a higher priority frequency layer cell or a higher priority radio access technology cell, and the serving cell is a UTRAN cell,
wherein (210) signal strength is measured across the n iterations while the user equipment is in one of a Cell-PCH state, URA-PCH state or idle mode with the UTRAN serving cell, and
wherein (212) a first one of the n iterations measures signal strength on a first available measurement opportunity after transitioning to the said one of the Cell-PCH state, URA-PCH state or idle mode.

7. The method according to claim 6, in which the time interval comprises one discontinuous reception period which the user equipment utilizes with the serving cell.

8. The method according to claim 6 or 7, further comprising:
reselecting the user equipment from the serving cell to the neighbour cell based on the analyzed *n* measured signal strengths without regard to signal quality of the serving cell.

9. The method according to claim 6 or 7, further comprising:
reselecting the user equipment from the serving cell to the neighbour cell based on the analyzed *n* measured signal strengths without regard to whether a reselection condition remains satisfied for a specified time period T_{reselection}.

10. The method according to any of claims 6 to 9, in which the method is executed by a modem disposed within the user equipment.

11. A computer readable memory storing a set of instructions which, when executed by a user terminal, cause the user terminal to:
determine (202) that a neighbour cell is a higher priority cell than a serving cell;
measure signal strength received from the neighbour cell; and
analyze the measured signal strength for reselecting the user equipment from the serving cell to the neighbour cell, **characterised in that**:
the measurement comprises measuring (204) signal strength received from the neighbour cell in *n* iterations each spaced from one another by a time interval specific for the case in which the neighbour cell is the higher priority cell, in which *n* is an integer greater than one; and
the analysis comprises analysing (206) the *n* measured signal strengths for reselecting the user equipment from the serving cell to the neighbour cell,
wherein (208) the neighbour cell is a higher priority frequency layer cell or a higher priority radio access technology cell, and the serving cell is a UTRAN cell,
wherein (210) signal strength is measured across the *n* iterations while the user equipment is in one of a Cell-PCH state, URA-PCH state or idle mode with the UTRAN serving cell, and
wherein (212) a first one of the *n* iterations measures signal strength on a first available measurement opportunity after transitioning to the said one of the Cell-PCH state, URA-PCH state or idle mode.

12. The computer readable memory according to claim 11, in which the time interval comprises one discontinuous reception period which the user equipment utilizes with the serving cell.

13. The computer readable memory according to claims 11 or 12, in which the set of instructions, when executed, further cause the user equipment to:
reselect the user equipment from the serving cell to the neighbour cell based on the analyzed *n* measured signal strengths either:
without regard to signal quality of the serving cell; or
without regard to whether a reselection condition remains satisfied for a specified time period T_{reselection}.

## Patentansprüche

1. Gerät zum Steuern eines Endgeräts, wobei das Gerät ein Verarbeitungssystem umfasst, das eingerichtet ist, um
zu bestimmen (202), dass eine Nachbarzelle eine Zelle mit höherer Priorität als eine bedienende Zelle ist,
die Signalstärke, die von der Nachbarzelle empfangen wird, zu messen, und
die gemessenen Signalstärken zu analysieren, um das Endgerät von der bedienenden Zelle zu der Nachbarzelle neu auszuwählen, **dadurch gekennzeichnet, dass**:
die Messung das Messen (204) der Signalstärke, die von der Nachbarzelle empfangen wird, in *n* Iterationen umfasst, die voneinander durch ein Intervall beabstandet sind, das für den Fall spezifisch ist, dass die Nachbarzelle die Zelle mit höherer Priorität ist, wobei *n* eine Ganzzahl größer als eins ist, und
die Analyse das Analysieren (206) der *n* gemessenen Signalstärken umfasst, um das Gerät von der bedienenden Zelle zu der Nachbarzelle neu auszuwählen,
wobei (208) die Nachbarzelle eine Frequenzlagenzelle mit höherer Priorität oder eine Funkzugangstechnologiezelle mit höherer Priorität ist, und die bedienende Zelle eine UTRAN-Zelle ist,
wobei (210) die Signalstärke über die *n* Iterationen gemessen wird, während das Endgerät in einem Zellen-PCH-Zustand oder URA-PCH-Zustand oder Ruhezustand mit der bediendenen UTRAN-Zelle ist, und
wobei (212) eine erste der *n* Iterationen die Signalstärke auf einer ersten verfügbaren Messgelegenheit nach Übergehen auf den Zellen-PCH-Zustand, URA-PCH-Zustand oder Ruhemodus misst.

2. Gerät nach Anspruch 1, wobei das Zeitintervall eine ununterbrochene Empfangsperiode umfasst, die das Endgerät mit der bedienenden Zelle verwendet.

3. Gerät nach Anspruch 1 oder 2, wobei das Verarbeitungssystem ferner eingerichtet ist, um:
von der bedienenden Zelle zu der Nachbarzelle basierend auf den analysierten *n* gemessenen Signalstärken ungeachtet der Signalqualität der bedienenden Zelle neu auszuwählen.

4. Gerät nach Anspruch 1 oder 2, wobei das Verarbeitungssystem ferner eingerichtet ist, um:
von der bedienenden Zelle zu der Nachbarzelle basierend auf den analysierten *n* gemessenen Signalstärken ungeachtet dessen neu auszuwählen, ob eine Neuauswahlbedingung für eine spezifizierte Zeitspanne T_{reselection} erfüllt bleibt.

5. Gerät nach einem der vorhergehenden Ansprüche, wobei das Verarbeitungssystem ein Modem umfasst, das innerhalb des Endgeräts angeordnet ist.

6. Verfahren zum Steuern eines Endgeräts, wobei das Verfahren Folgendes umfasst:
Bestimmen (202), dass eine Nachbarzelle eine Zelle mit höherer Priorität ist als eine bedienende Zelle,
Messen der Signalstärke, die von der Nachbarzelle empfangen wird, und
Analysieren der gemessenen Signalstärke zum Neuauswählen des Endgeräts von der bedienenden Zelle zu der Nachbarzelle, **dadurch gekennzeichnet, dass**:
die Messung das Messen (204) der Signalstärke, die von der Nachbarzelle empfangen wird, in *n* Iterationen umfasst, die jeweils voneinander durch ein spezifisches Intervall für den Fall beabstandet sind, dass die Nachbarzelle die Zelle mit höherer Priorität ist, wobei *n* eine Ganzzahl größer als eins ist, und
die Analyse das Analysieren (206) der *n* gemessenen Signalstärken zur Neuauswahl des Endgeräts von der bedienenden Zelle zu der Nachbarzelle umfasst,
wobei (208) die Nachbarzelle eine Frequenzlagenzelle mit höherer Priorität oder eine Rundfunkzugangstechnologiezelle mit höherer Priorität ist, und die bedienende Zelle eine UTRAN-Zelle ist,
wobei (210) die Signalstärke über die *n* Iterationen gemessen wird, während das Endgerät in einem Zellen-PCH-Zustand oder URA-PCH-Zustand oder Ruhezustand mit der bediendenen UTRAN-Zelle ist, und
wobei (212) eine erste der *n* Iterationen die Signalstärke auf einer ersten verfügbaren Messgelegenheit nach dem Übergehen auf den Zellen-PCH-Zustand oder URA-PCH-Zustand oder Ruhemodus misst.

7. Verfahren nach Anspruch 6, wobei das Zeitintervall eine ununterbrochene Empfangsperiode umfasst, die das Endgerät mit der bedienenden Zelle verwendet.

8. Verfahren nach Anspruch 6 oder 7, das ferner Folgendes umfasst:
Neuauswählen des Endgeräts von der bedienenden Zelle zu der Nachbarzelle basierend auf den analysierten *n* gemessenen Signalstärken ungeachtet der Signalqualität der bedienenden Zelle.

9. Verfahren nach Anspruch 6 oder 7, das ferner Folgendes umfasst:
Neuauswählen des Endgeräts von der bedienenden Zelle zu der Nachbarzelle basierend auf den analysierten *n* gemessenen Signalstärken ungeachtet dessen, ob eine Neuauswahlbedingung für eine spezifizierte Zeitspanne T_{reselection} erfüllt bleibt.

10. Verfahren nach einem der Ansprüche 6 bis 9, wobei das Verfahren von einem Modem, das innerhalb der des Endgeräts angeordnet ist, ausgeführt wird.

11. Computerlesbarer Speicher, der einen Satz von Anweisungen speichert, der, wenn er von einem Endgerät ausgeführt wird, das Endgerät zu Folgendem veranlasst:
Bestimmen (202), dass eine Nachbarzelle eine Zelle mit höherer Priorität ist als eine bedienende Zelle,
Messen der Signalstärke, die von der Nachbarzelle empfangen wird, und
Analysieren der gemessenen Signalstärke zum Neuauswählen des Endgeräts von der bedienenden Zelle zu der Nachbarzelle, **dadurch gekennzeichnet, dass**:
die Messung des Messen (204) der Signalstärke, die von der Nachbarzelle in *n* Iterationen empfangen wird, die jeweils voneinander durch ein spezifisches Zeitintervall für den Fall getrennt sind, dass die Nachbarzelle die Zelle mit höherer Priorität ist, wobei *n* eine Ganzzahl größer als eins ist, und
die Analyse das Analysieren (206) der *n* gemessenen Signalstärken zum Neuauswählen des Endgeräts von der bedienenden Zelle zu der Nachbarzelle umfasst,
wobei (208) die Nachbarzelle eine Frequenzlagenzelle mit höherer Priorität oder eine Funkzugangstechnologiezelle mit höherer Priorität ist, und die bedienende Zelle eine UTRAN-Zelle ist,
wobei (210) die Signalstärke über die *n* Iterationen gemessen wird, während das Endgerät in einem Zellen-PCH-Zustand oder URA-PCH-Zustand oder Ruhemodus mit der bedienenden UTRAN-Zelle ist, und
wobei (212) eine erste der *n* Iterationen die Signalstärke auf einer ersten verfügbaren Messgelegenheit nach dem Übergehen auf den Zellen-PCH-Zustand oder URA-PCH-Zustand oder Ruhemodus misst.

12. Computerlesbarer Speicher nach Anspruch 11, wobei das Zeitintervall eine ununterbrochene Empfangsperiode umfasst, die das Endgerät mit der bedienenden Zelle verwendet.

13. Computerlesbarer Speicher nach Anspruch 11 oder 12, wobei der Satz von Anweisungen, wenn er ausgeführt wird, das Endgerät ferner zu Folgendem veranlasst:
Neuauswählen des Endgeräts von der bedienenden Zelle zu der Nachbarzelle basierend auf den analysierten *n* gemessenen Signalstärken, entweder:
ungeachtet der Signalqualität der bedienenden Zelle, oder
ungeachtet dessen, ob eine Neuauswahlbedingung für eine spezifizierte Zeitspanne T_{reselection} erfüllt bleibt.

## Revendications

1. Appareil pour commander un équipement utilisateur, l'appareil comprenant un système de traitement agencé pour :
déterminer (202) qu'une cellule voisine est une cellule de priorité plus élevée qu'une cellule de desserte ;
mesurer une intensité de signal reçue à partir de la cellule voisine ; et
analyser les intensités de signal mesurées pour resélectionner l'équipement utilisateur de la cellule de desserte à la cellule voisine, **caractérisé en ce que** :
la mesure comprend la mesure (204) d'une intensité de signal reçue à partir de la cellule voisine dans n itérations espacées chacune l'une de l'autre d'un intervalle de temps spécifique pour le cas dans lequel la cellule voisine est la cellule de priorité plus élevée, dans lequel n est un entier supérieur à un ; et
l'analyse comprend l'analyse (206) des n intensités de signal mesurées pour resélectionner l'équipement utilisateur de la cellule de desserte à la cellule voisine,
dans lequel (208) la cellule voisine est une cellule de couche de fréquence de priorité plus élevée ou une cellule de technologie d'accès radio de priorité plus élevée, et la cellule de desserte est une cellule UTRAN,
dans lequel (210) une intensité de signal est mesurée sur les n itérations alors que l'équipement utilisateur est dans un parmi un état Cell-PCH, un état URA-PCH ou un mode inactif avec la cellule de desserte UTRAN, et
dans lequel (212) une première des n itérations mesure une intensité de signal sur une première opportunité de mesure disponible après avoir basculé sur ledit un parmi l'état Cell-PCH, l'état URA-PCH ou le mode inactif.

2. Appareil selon la revendication 1, dans lequel l'intervalle de temps comprend une période de réception discontinue que l'équipement utilisateur utilise avec la cellule de desserte.

3. Appareil selon la revendication 1 ou 2, dans lequel le système de traitement est agencé en outre pour :
resélectionner de la cellule de desserte à la cellule voisine sur la base des n intensités de signal mesurées analysées sans considération de la qualité de signal de la cellule de desserte.

4. Appareil selon la revendication 1 ou 2, dans lequel le système de traitement est agencé en outre pour :
resélectionner de la cellule de desserte à la cellule voisine sur la base des n intensités de signal mesurées analysées sans considération du fait qu'une condition de resélection reste satisfaite pendant une période de temps spécifiée T_{reselection}.

5. Appareil selon une quelconque revendication précédente, dans lequel le système de traitement comprend un modem disposé dans l'équipement utilisateur.

6. Procédé de commande d'un équipement utilisateur, le procédé comprenant :
la détermination (202) du fait qu'une cellule voisine est une cellule de priorité plus élevée qu'une cellule de desserte ;
la mesure d'une intensité de signal reçue à partir de la cellule voisine ; et
l'analyse de l'intensité de signal mesurée pour resélectionner l'équipement utilisateur de la cellule de desserte à la cellule voisine, **caractérisé en ce que** :
la mesure comprend la mesure (204) d'une intensité de signal reçue à partir de la cellule voisine dans n itérations espacées chacune l'une de l'autre d'un intervalle de temps spécifique pour le cas dans lequel la cellule voisine est la cellule de priorité plus élevée, dans lequel n est un entier supérieur à un ; et
l'analyse comprend l'analyse (206) des n intensités de signal mesurées pour resélectionner l'équipement utilisateur de la cellule de desserte à la cellule voisine,
dans lequel (208) la cellule voisine est une cellule de couche de fréquence de priorité plus élevée ou une cellule de technologie d'accès radio de priorité plus élevée, et la cellule de desserte est une cellule UTRAN,
dans lequel (210) une intensité de signal est mesurée sur les n itérations alors que l'équipement utilisateur est dans un parmi un état Cell-PCH, un état URA-PCH ou un mode inactif avec la cellule de desserte UTRAN, et
dans lequel (212) une première des n itérations mesure une intensité de signal sur une première opportunité de mesure disponible après avoir basculé sur ledit un parmi l'état Cell-PCH, l'état URA-PCH ou le mode inactif.

7. Procédé selon la revendication 6, dans lequel l'intervalle de temps comprend une période de réception discontinue que l'équipement utilisateur utilise avec la cellule de desserte.

8. Procédé selon la revendication 6 ou 7, comprenant en outre :
la resélection de l'équipement utilisateur de la cellule de desserte à la cellule voisine sur la base des n intensités de signal mesurées analysées sans considération de la qualité de signal de la cellule de desserte.

9. Procédé selon la revendication 6 ou 7, comprenant en outre :
la resélection de l'équipement utilisateur de la cellule de desserte à la cellule voisine sur la base des n intensités de signal mesurées analysées sans considération du fait qu'une condition de resélection reste satisfaite pendant une période de temps spécifiée T_{reselection}.

10. Procédé selon l'une quelconque des revendications 6 à 9, dans lequel le procédé est exécuté par un modem disposé dans l'équipement utilisateur.

11. Mémoire lisible par ordinateur stockant un jeu d'instructions qui, quand elles sont exécutées par un terminal utilisateur, amènent le terminal utilisateur à :
déterminer (202) qu'une cellule voisine est une cellule de priorité plus élevée qu'une cellule de desserte ;
mesurer une intensité de signal reçue à partir de la cellule voisine ; et
analyser l'intensité de signal mesurée pour resélectionner l'équipement utilisateur de la cellule de desserte à la cellule voisine, **caractérisé en ce que** :
la mesure comprend la mesure (204) d'une intensité de signal reçue à partir de la cellule voisine dans n itérations espacées chacune l'une de l'autre d'un intervalle de temps spécifique pour le cas dans lequel la cellule voisine est la cellule de priorité plus élevée, dans lequel n est un entier supérieur à un ; et
l'analyse comprend l'analyse (206) des n intensités de signal mesurées pour resélectionner l'équipement utilisateur de la cellule de desserte à la cellule voisine,
dans lequel (208) la cellule voisine est une cellule de couche de fréquence de priorité plus élevée ou une cellule de technologie d'accès radio de priorité plus élevée, et la cellule de desserte est une cellule UTRAN,
dans lequel (210) une intensité de signal est mesurée sur les n itérations alors que l'équipement utilisateur est dans un parmi un état Cell-PCH, un état URA-PCH ou un mode inactif avec la cellule de desserte UTRAN, et
dans lequel (212) une première des n itérations mesure une intensité de signal sur une première opportunité de mesure disponible après la transition audit un parmi l'état Cell-PCH, l'état URA-PCH ou le mode inactif.

12. Mémoire lisible par ordinateur selon la revendication 11, dans laquelle l'intervalle de temps comprend une période de réception discontinue que l'équipement utilisateur utilise avec la cellule de desserte.

13. Mémoire lisible par ordinateur selon les revendications 11 ou 12, dans laquelle le jeu d'instructions, quand il est exécuté, amène en outre l'équipement utilisateur à :
resélectionner l'équipement utilisateur de la cellule de desserte à la cellule voisine sur la base des n intensités de signal mesurées analysées, soit :
sans considération de la qualité de signal de la cellule de desserte ; soit
sans considération du fait qu'une condition de resélection reste satisfaite pendant une période de temps spécifiée T_{reselection}.
